# EUROPEAN PATENT APPLICATION

(11) **EP 1 679 532 A1**
(43) Date of publication of application: **12.07.2006**
(21) Application number: 04793248.8
(22) Date of filing: 29.10.2004
(51) Int. Cl.: G02B 1/11, G02B 3/00, C03C 15/00, C03C 17/06, C03B 11/08, C03B 40/02

(54) **OPTICAL ELEMENT HAVING ANTIREFLECTION STRUCTURE, AND METHOD FOR PRODUCING OPTICAL ELEMENT HAVING ANTIREFLECTION STRUCTURE**

(30) Priority: 29.10.2003 JP 2003369522; 30.10.2003 JP 2003370946
(71) Applicant: MATSUSHITA ELECTRIC INDUSTRIAL CO., LTD., Kadoma-shi, Osaka 571-8501 (JP)
(72) Inventor: UMETANI, Makoto Matsushita Electric Ind. Co,Ltd, Shiromi 1-chome, Chuo-ku, Osaka 540-6319 (JP); SHIMIZU, Yoshiyuki Matsushita Electr. Ind.Co.Ltd, 3-7-1 Shiromi, Chuo-ku, Osaka 540-6319 (JP); YAMAMOTO, Yoshiharu Matsushita Electr.Ind. Co, Ltd, 3-7-1 Shiromi, Chuo-ku Osaka 540-6319 (JP); YAMAGATA, Michihiro Matsushita Electr.Ind.Co., Ltd, 3-7-1 Shiromi, Chuo-ku, Osaka 540-6319 (JP); TANAKA, Yasuhiro Matsushita Electr. Ind.Co,Ltd., 3-7-1 Shiromi, Chuo-ku, Osaka 540-6319 (JP); YAMAGUCHI, Hiroshi Matsushita Electr. Ind. Co.,Ltd, 3-7-1 Shiromi, Chuo-ku Osaka 540-6319 (JP)
(74) Representative: Gassner, Wolfgang
(86) International application number: PCT/JP2004/016147
(87) International publication number: WO 2005/040864

(57) **Abstract**

An obj ect is to provide a method for producing an optical element having an antireflection structure that allows an optical element having a highly precise antireflection structure without pattern dislocation over a large area to be produced repeatedly. A cylinder-shaped Cr mask having a diameter of 0.15 µm is formed at a pitch of 0.15 µm on a quartz glass substrate. The quartz glass substrate on which the cylinder-shaped Cr mask is formed is placed in a RF dry-etching apparatus and the surface of the quartz glass substrate is etched with CHF₃ + O₂ gas. Thus, a cone-shaped antireflection structure with a pitch of 0. 15 µm and a height of 0.15 µm is formed on the surface of the quartz glass substrate. An Ir-Rh alloy film having a thickness of 0.05 µm for protecting the surface is formed on the surface (pressing surface) of the quartz glass substrate provided with the cone-shaped antireflection structure to form a mold having an antireflection structure. An optical material (crown based borosilicate glass) to which a releasing agent containing fine particles of carbon (C) for mold release is applied is press-molded with the mold having an antireflection structure, and the press-molded optical material is released from the mold having an antireflection structure without cooling. After the press-molded optical material is cooled, the releasing agent is removed.

## Description

### TECHNICAL FIELD

The present invention relates to an optical element having an antireflection structure, and a method for producing the element. Particularly, the present invention relates to an optical element having an antiref lection structure and being formed with multicomponent glass, and a method for producing the same.

### BACKGROUND ART

In order to prevent surface reflection of an optical element, it has been proposed to form an antireflection structure on a surface of an optical element. The proposed antireflection structure has very fine concavities and convexities having an aspect ratio of 1 or more at sub-micron pitches. As a method for forming such a fine structure, micromachiningmethodby dry-etching process has been proposed.

On the other hand, a method of press-molding an optical material (deformable material) made of glass or resin has been proposed as an effective method for producing highly precise optical elements in a large amount and in a low cost. When press-molding a heated and softened optical material made of glass or resin with a mold, it is difficult to release the optical material from the mold, so that some improvements such as forming a special releasing film on the surface of the mold or applying a releasing agent at every molding shot are provided in order to facilitate the release. In particular, when using glass as the optical material, very special coating is formed on the surface of the mold.

For example, JP62-28091B discloses that WC-based cemented carbide or cermet is used as a mold material, and the surface of a mold produced with this mold material is coated with a noble metal-based protective film. Then, using the mold having such a structure, it is possible to mass-produce optical elements by press-molding. In the mold described in JP6-305742A, a carbon film having a thickness of 10 nm or less is formed on a surface having an optical function of the main body of the mold made of boron nitride, chromium nitride, chromium carbide, chromium oxide, silicon carbide, carbon, platinum or cemented carbide so as to provide good releasing properties with respect to glass.

### DISCLOSURE OF THE INVENTION

### PROBLEMS TO BE SOLVED BY THE INVENTION

However, in the case of micromachining method by dry-etching process, depending on the optical materials to be used, the surface becomes rough after etching, or the etching rate is very low, and therefore the optical material that can be used is limited. That is to say, the optical material that can be used is limited to quartz glass or the like, and multicomponent glass or resin, which are used for optical devices that are designed with various optical constants, cannot be used. Therefore, when it is attempted to produce an optical element having an antireflection structure by micromachining method by dry-etching process, an optical element having an antireflection structure having a large aspect ratio cannot be obtained, because necessary selectivity cannot be obtained. Furthermore, since the repeatability of etching is low, the yield is reduced, mass productivity is lowered, and consequently the production cost is increased significantly.

For press-molding an optical element having an antireflection structure, in a conventional press-molding method, when a heated and softened optical material is cooled while being in contact with a mold (while being pressed), a thermal stress is caused by the difference in the thermal expansion coefficient between the mold and the optical material. Consequently, the precision of a pattern transferred to the optical material is reduced. In particular, the longer the distance from the center of the mold toward the outer circumference is, the larger the dislocation of the pattern transferred to the optical material is. Therefore, a pattern with fine concavities and convexities cannot be transferred precisely over a large area. Thus, it is necessary to release the mold from the press-molded optical material without cooling.

However, when glass serving as the optical material is press-molded, using the mold disclosed in JP62-28091B that is produced using WC-based cemented carbide or cermet as the mold material and the surface of which is coated with a noble metal-based protective film, the releasing properties between the mold and the glass is satisfactory, but the mold cannot be released from the press-molded glass without being cooled, and thus an optical element having an antireflection structure cannot be molded precisely. When the mold disclosed in JP6-305742A in which a carbon film is formed is used, the mold can be released without being cooled, but it is very difficult to process the material of the mold main body so as to have a shape with concavities and convexities for an antireflection structure.

When producing an optical element having an antireflection structure by press-molding, a pressing surface of the mold has to have an inverse shape of the optical element. However, it may be difficult to form an inverse shape, depending on the shape of the optical element. For example, in the case of a microlens array, in general, a cylinder-shaped resist pattern is formed on a substrate and then heated and softened, and a lens shape is formed by surface tension, and then the substrate is etched by dry-etching. However, by such a method, it is easy to form a convex shape, but it is very difficult to form a concave shape used as a mold. Therefore, it is very difficult to produce a mold for molding a microlens array having a concave shape, and it is more difficult to form an antireflection structure in the mold to obtain a mold for molding a microlens array having the antireflection structure.

Therefore, with the foregoing in mind, it is an object of the present invention to provide a method for producing an optical element having an antireflection structure that allows an optical element having a highly precise antireflection structure without pattern dislocation over a large area to be produced repeatedly, and an optical element having an antireflection structure that is produced by such a method.

### SOLUTION TO THE PLOBLEMS

One of the above objects is achieved by the following optical element having an antireflection structure on its surface, the antireflection structure is formed with multicomponent glass and has a plurality of cone-shaped or polygonal pyramid-shaped structures being arranged, and an aspect ratio of which is 1 or more.

Also, one of the above objects is achieved by the following method for producing an optical element having an antireflection structure on its surface, the antireflection structure is formed with multicomponent glass and has a plurality of cone-shaped or polygonal pyramid-shaped structures being arranged, and an aspect ratio of which is 1 or more, the method has the steps of heating multicomponent glass material, press-molding a heated multicomponent glass material with a mold having a shape corresponding to the antireflection structure to be formed, and removing a molded multicomponent glass material from the mold before the material is cooled to a temperature at which no change of a shape of the material occurs.

### EFFECT OF THE INVENTION

According to a method for producing an optical element of the present invention, it is possible to release a mold having an antireflection structure from a press-molded optical material without cooling, so that the thermal stress due to the difference in the thermal expansion coefficient between the mold having an antireflection structure and the press-molded optical material can be prevented from being generated, and thus the precision of the pattern transferred to the optical material can be increased. As a result, an optical element having a highly precise antireflection structure without pattern dislocation over a large area can be molded repeatedly. Also, according to the method for producing the optical element having an antireflection structure of the present invention, because the optical element is produced by press-molding using the mold having an antireflection structure, the optical element having an antireflection structure can be produced with high repeatability. As a result, the mass productivity is significantly improved, and therefore, the production cost can be decreased significantly.

### BRIEF DESCRIPTION OF THE DRAWINGS

[FIG. 1] FIG. 1 is a cross-sectional view showing a mold for press-molding an optical element having an antireflection structure in a first embodiment of the present invention.
[FIG. 2] FIG. 2 shows a process sequence of a process for producing a mold having an antireflection structure in the first embodiment of the present invention.
[FIG. 3] FIG. 3 shows a process sequence of a process for molding an optical element having an antireflection structure in the first embodiment of the present invention.
[FIG. 4] FIG. 4 shows a process sequence of a method for press-molding an optical element having an antireflection structure in the first embodiment of the present invention.
[FIG. 5] FIG. 5 shows a process sequence of a process for producing a mold having an antireflection structure in a fourth embodiment of the present invention.
[FIG. 6] FIG. 6 is a cross-sectional view showing a master mold having an antireflection structure for producing a mold for press-molding an optical element having an antireflection structure in a fifth embodiment of the present invention.
[FIG. 7] FIG. 7 shows a process sequence of a process for producing a master mold having an antireflection structure in the fifth embodiment of the present invention.
[FIG. 8] FIG. 8 shows a process sequence of a process for molding a replica mold having an antireflection structure in the fifth embodiment of the present invention.
[FIG. 9] FIG. 9 shows a process sequence of a method for press-molding a replica mold having an antireflection structure in the fifth embodiment of the present invention.
[FIG. 10] FIG. 10 is a cross-sectional view showing a mold for press-molding an optical element having an antireflection structure in the fifth embodiment of the present invention.
[FIG. 11] FIG. 11 shows a process sequence of a process for molding an optical element having an antireflection structure in the fifth embodiment of the present invention.
[FIG. 12] FIG. 12 shows a process sequence of a method for press-molding an optical element having an antireflection structure in the fifth embodiment of the present invention.
[FIG. 13] FIG. 13 shows a process sequence of a process for producing a quartz microlens array on which a master mold having an antireflection structure is based in an eighth embodiment of the present invention.
[FIG. 14] FIG. 14 shows a process sequence of a process for molding the master mold having an antireflection structure in the eighth embodiment of the present invention.

### DESCRIPTION OF THE REFERENCE CHARACTERS

1, 25, 51, 79 Quartz glass substrate
- 2, 30, 52, 89: Antireflection structure
- 3, 31: Mold having an antireflection structure
- 4, 54: Lower mold
- 5: Upper head
- 6: Upper mold
- 7: Preheated stage
- 8: Press stage
- 9: Cooling stage
- 10: Lower mold
- 11: Optical material
- 12: Mold inlet
- 13: Cylinder
- 14: Mold outlet
- 15: Chamber
- 16, 71: Releasing agent
- 17, 67: Optical element
- 18: Atmosphere gas inlet
- 20, 75: Cr film
- 21, 26, 76, 85: PMMA resist
- 22, 77: Cylinder-shaped pattern
- 23, 78: Cr mask
- 27, 86: X-rays
- 28, 87: Mask for X-ray lithography
- 29, 88: Mask
- 53, 90: Master mold having an antireflection structure
- 70: Alkali-free glass (High melting point glass)
- 72: Replica mold having an antireflection structure
- 80: Photoresist
- 81: Cylinder-shaped photoresist pattern
- 82: Semispherical photoresist pattern
- 83: Microlens array
- 84: Quartz microlens array

### BEST MODE FOR CARRYING OUT THE INVENTION

Hereinafter, the present invention will be described more specifically by way of embodiments.

### [First Embodiment]

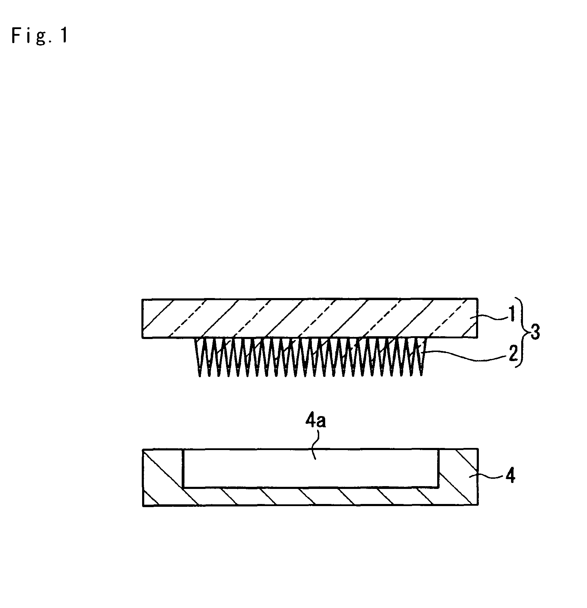

This embodiment will be described by taking a plate optical element having a cone-shaped microstructure of a pitch of 0.15 µm and a depth of 0.15 µm at one face as an example of the optical element having an antireflection structure of the present invention. FIG. 1 is a cross-sectional view showing a mold for press-molding an optical element having an antireflection structure in the first embodiment of the present invention. In FIG. 1, reference numeral 1 denotes a quartz glass substrate of 20 mm × 20 mm × 5 mm. Quartz glass is a material that has excellent high temperature strength and heat resistance and whose surface is hardly roughened by dry-etching. In the surface (pressing surface) of the quartz glass substrate 1, a cone-shaped antireflection structure 2 having a pitch of 0.15 µm and a height of 0.15 µm is formed, and the quartz glass substrate 1 in which this antireflection structure 2 is formed is used as a mold 3 having an antireflection structure.

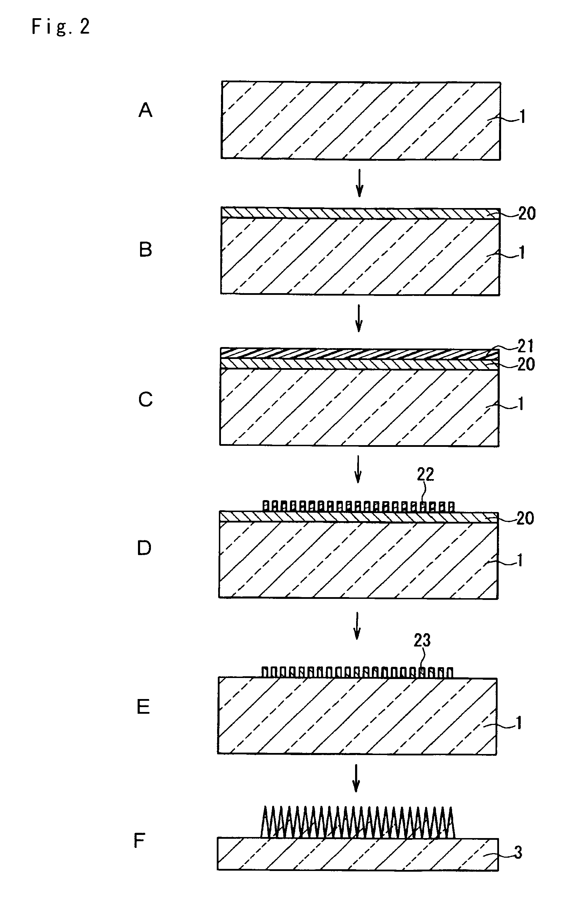

Hereinafter, a method for producing the mold 3 having an antireflection structure will be described with reference to FIG. 2. As shown in FIG. 2A, first, the surface (pressing surface) of the quartz glass substrate 1 was processed so as to be smooth by high precision grinding and polishing (Ra: about 2nm). Then, as shown in FIG. 2B, a Cr film 20 having a thickness of 0.1 µm was formed on the surface (pressing surface) of the quartz glass substrate 1 that had been processed so as to be smooth by sputtering. Then, as shown in FIG. 2C, a PMMA resist 21 having a thickness of 0.3 µm was formed on the surface of the Cr film 20 by spin-coating. Then, as shown in FIG. 2D, a cylinder-shaped pattern 22 made of the PMMA resist having a diameter of 0.15 µm was formed on the surface of the Cr film 20 at a pitch of 0.15 µm by EB (electron beams) lithography. Then, as shown in FIG. 2E, a cylinder-shaped pattern made of Cr corresponding to the antireflection structure 2 was formed as a mask on the surface (pressing surface) of the quartz glass substrate 1 by wet-etching the Cr film 20 (Cr mask 23).

This Cr mask 23 was formed in an array with a pitch of a wavelength to be used or less. Then, as shown in FIG. 2F, the quartz glass substrate 1 in which the cylinder-shaped Cr mask 23 was formed was placed in a RF dry-etching apparatus and the surface of the quartz glass substrate 1 was etched with CHF₃ + O₂ gas. Thus, the Cr mask 23 also was etched little by little together with the quartz glass substrate 1, and the width thereof was reduced. Then, the surface of the substrate was etched until the Cr mask 23 was no longer present, so that a cone-shaped antireflection structure 2 with a pitch of 0.15 µm and a height of 0.15 µm was formed on the surface (pressing surface) of the quartz glass substrate 1. The surface was little rough after the etching, and the surface roughness was substantially equal to that of a polished surface. Finally, an Ir-Rh alloy film having a thickness of 0.05 µm for protecting the surface was formed by sputtering on the surface (pressing surface) of the quartz glass substrate 1 provided with the cone-shaped antireflection structure 2. In this manner, the mold 3 having an antireflection structure was obtained.

A lower mold 4 has the following structure. As shown in FIG. 1, a recess 4a of 15 mm × 15 mm × 0.5 mm is formed in the central portion of a WC-based cemented carbide of 20 mm × 20 mm × 5 mm, and an Ir-Rh alloy film having a thickness of 0.5 µm for protecting the surface is formed on the surface provided with the recess 4a by sputtering.

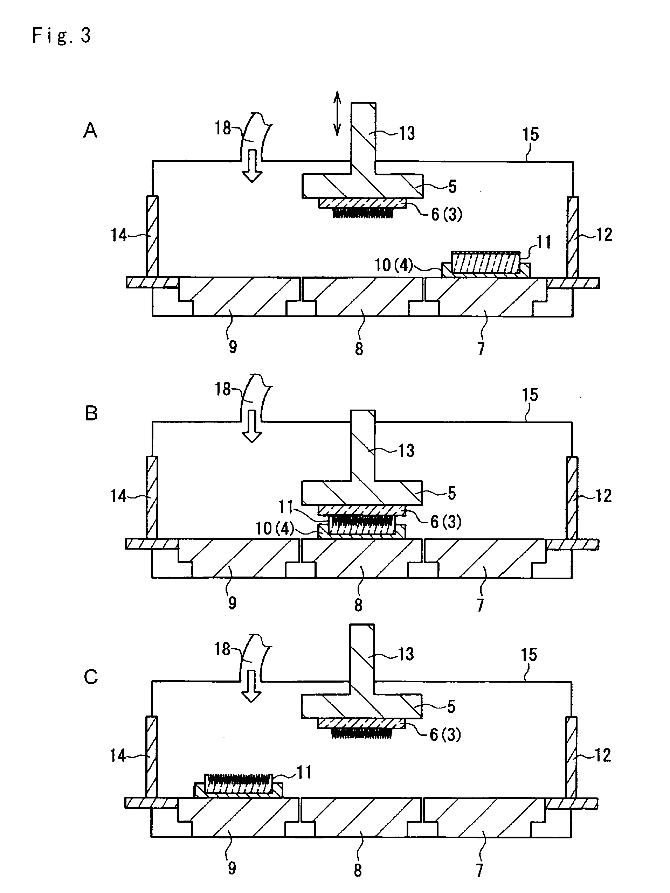

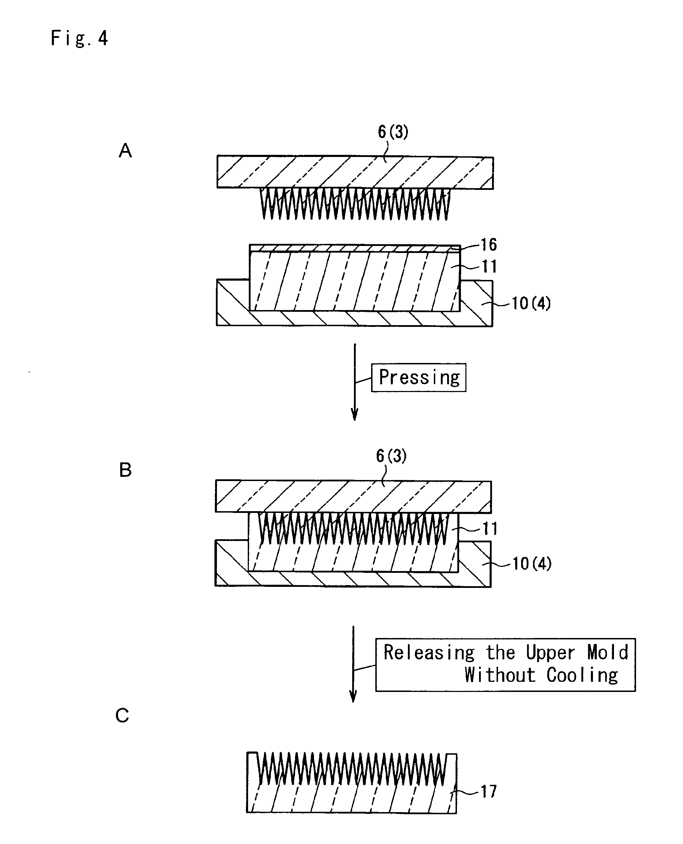

Hereinafter, a method for producing an optical element having an antireflection structure using the mold 3 having an antireflection structure and the lower mold 4 having such structures will be described with reference to FIGS. 3 and 4. FIG. 3 shows a process sequence of a process for molding an optical element having an antireflection structure in the first embodiment of the present invention. FIG. 4 shows a process sequence of a method for press-molding the optical element having an antireflection structure in the first embodiment of the present invention.

As shown in FIG. 3A, first, the mold 3 having an antireflection structure serving as an upper mold 6 was fixed on an upper head 5 of a molding machine covered with a chamber 15, and the upper mold 6 was heated to a predetermined temperature (590°C in this embodiment) together with a press stage 8. Moreover, a preheated stage 7 also was heated to 590°C. Then, the above-described lower mold 4 was used as a lower mold 10, and crown based borosilicate glass (glass transition point (Tg): 501°C, deformation point (At): 549°C) of 15 mm × 15 mm × 1.0 mm, which was an optical material 11, was placed on the lower mold 10, and the lower mold 10 on which the optical material 11 was placed was put in the molding machine from a mold inlet 12 of the chamber 15, and heated in the preheated stage 7 that was set to 590°C for 3 minutes. In this embodiment, a releasing agent 16 containing fine particles of carbon (C) for mold release was applied onto the surface of the optical material 11 (see FIG. 4A).

As shown in FIG. 3B, the lower mold 10 provided with the optical material 11 was transported from the preheated stage 7 to the press stage 8 that also was set to 590°C. Then, a cylinder 13 was lowered so as to press the optical material 11 with the upper mold 6 that also was set to 590°C and fixed to the upper head 5 at a pressure to be applied of 1000 N for 3 minutes (see FIGS. 4A and 4B). Then, the cylinder 13 was lifted without being cooled (at the temperature unchanged) so that the upper mold 6 as well as the upper head 5 were lifted, and thus the upper mold 6 was released from the press-molded optical material 11 (see FIGS. 4B and 4C).

Here, the upper mold 6 can be released without being cooled (at a high temperature unchanged) from the press-molded optical material 11, because the wettability thereof with the optical material 11 is poor. In other words, with oxide or metal, the upper mold cannot be released without being cooled (at a high temperature unchanged), whereas with carbon (C) (or boron nitride (BN)), the wettability is very poor, so that the upper mold can be released without being cooled (at a high temperature unchanged) . When the upper mold 6 is released from the press-molded optical material 11, the press-molded optical material 11 remains on the lower mold 10.

Then, as shown in FIG. 3C, the lower mold 10 provided with the press-molded optical material 11 was transported from the press stage 8 to a cooling stage 9 that was set to 300°C, and was cooled for 3 minutes there.

Finally, the press-molded optical material 11 was taken from a mold outlet 14 of the chamber 15 together with the lower mold 10, the press-molded optical material 11 was removed from the lower mold 10, and then the releasing agent 16 was removed. Thus, an optical element 17 having an antireflection structure was obtained (see FIG. 4C).

According to this embodiment, it is possible to release the upper mold 6 (mold 3 having an antireflection structure) from the press-molded optical material 11 without cooling, so that the thermal stress due to the difference in the thermal expansion coefficient between the upper mold 6 (mold 3 having an antireflection structure) and the press-molded optical material 11 can be prevented from being generated, and thus the precision of the pattern transferred to the optical material 11 can be increased. As a result, the optical element 17 having a highly precise antireflection structure without pattern dislocation over a large area can be molded repeatedly. Also, according to this embodiment, because the optical element 17 is produced by press-molding using the mold 3 having an antireflection structure, the optical element 17 having an antireflection structure can be produced with high repeatability. As a result, the mass productivity is significantly improved, and therefore, the production cost can be decreased significantly.

In this embodiment, quartz glass is used as the mold material that has excellent high temperature strength and heat resistance and whose surface is hardly roughened by dry-etching. However, the present invention is not limited to quartz glass as the mold material, but for example, mold materials in which a SiO₂ film or a Si film is formed on silicon, a Ni alloy, or cemented carbide may be used.

In this embodiment, crown based borosilicate glass is used as the optical material 11. However, the present invention is not limited to crown based borosilicate glass as the optical material, and multicomponent glass or resin can be used. In addition to borosilicate glass, examples of multicomponent glass include aluminosilicate glass, flint glass and phosphate glass. Examples of resin include acryl, fluorine-containing resin, polyethylene, and polyolefin. Since an antireflection structure is formed by molding, even if multicomponent glass or resin is used as the optical material 11, an optical element having an antireflection structure having a large aspect ratio can be obtained.

In this embodiment, an Ir-Rh alloy film is used as a thin film for protecting the surface. However, the present invention is not limited to Ir-Rh alloy films as a thin film for protecting the surface. As a thin film for protecting the surface, films containing at least one metal selected from the group consisting of Pt, Pd, Ir, Rh, Os, Ru, Re, W and Ta can be used. When the releasing agent 16 is not applied uniformly onto the surface of the optical material 11, without the thin film for protecting the surface, the optical material 11 is partially in contact directly with the mold, and fused completely so that the optical material cannot be released at all. When it is attempted to release the optical material forcefully, the optical material 11 is broken. The thin film such as an Ir-Rh alloy film for protecting the surface is provided to prevent this.

In this embodiment, a cylinder-shaped Cr mask corresponding to the antireflection structure 2 is formed on the surface (pressing surface) of the quartz glass substrate 1. However, the present invention is not limited to this structure. For example, a mask can be formed of a material such as Ni, Au or C, or a polygonal prismatic mask can be formed.

In this embodiment, a resist is patterned into a cylindrical shape or a polygonal prismatic shape, using electron beam lithography, but a resist can be patterned into a cylindrical shape or a polygonal prismatic shape, using X-ray lithography or photolithography employing interference exposure.

In this embodiment, a mask is formed into a cylindrical shape or a polygonal prismatic shape by wet-etching, but a mask can be formed into a cylindrical shape or a polygonal prismatic shape by dry-etching.

### [Second Embodiment]

In this embodiment, substantially the same mold as in the first embodiment was used as the mold for press-molding an optical element having an antireflection structure (see FIG. 1). The mold for press-molding in this embodiment is different from the mold for press-molding in the first embodiment in the following point. In this embodiment, when producing the mold 3 having an antireflection structure, a carbon (C) film for mold release having a thickness of 0.05 µm was formed on the surface (pressing surface) of the quartz glass substrate 1 provided with the cone-shaped antireflection structure 2, instead of forming an Ir-Rh alloy film for protecting the surface. For this reason, in this embodiment, unlike the first embodiment, a releasing agent for mold release is not applied onto the surface of the optical material 11 to be press-molded.

A method for producing the optical element 17 having an antireflection structure, using the mold 3 having an antireflection structure and the lower mold 4, is the same as that in the first embodiment (see FIGS. 3 and 4) and therefore is not described further. Also with this embodiment, for the same reason as in the first embodiment, the upper mold 6 (mold 3 having an antireflection structure) can be released without being cooled from the press-molded optical material 11, and therefore the optical element 17 having a highly precise antireflection structure without pattern dislocation over a large area can be molded repeatedly.

In this embodiment, when producing the mold 3 having an antireflection structure, a carbon (C) film for mold release is formed on the surface (pressing surface) of the quartz glass substrate 1 provided with the cone-shaped antireflection structure 2. However, the thin film for mold release is not limited to a carbon (C) film, and for example, a boron nitride (BN) film may be used.

### [Third Embodiment]

In this embodiment, the same mold as in the first embodiment was used as the mold for press-molding the optical element 17 having an antireflection structure (see FIG. 1). The process for molding the optical element 17 having an antireflection structure is substantially the same as that in the first embodiment. The molding process in this embodiment is different from the molding process in the first embodiment in the following point. In this embodiment, the optical element 17 having an antireflection structure is molded while N₂ and CO₂ (10 vol. %) were introduced from an atmosphere gas inlet 18 of the chamber 15 to the inside of the molding machine.

When the optical element 17 having an antireflection structure was molded in the atmosphere as above, it was found that an optical element 17 having a highly precise antireflection structure without pattern dislocation over the entire area of 15 mm × 15 mm of the optical material 11 could be molded repeatedly even after 10000 molding shots.

As a comparative example, the optical element 17 having an antireflection structure was molded under the same conditions while introducing only N₂ gas to the molding machine. Then, the releasing properties between the upper mold 6 (mold 3 having an antireflection structure) and the optical material 11 were poor, so that the upper mold 6 (mold 3 having an antireflection structure) could not be released from the press-molded optical material 11 without being cooled (at a temperature unchanged (590 °C)) after the optical material 11 was pressed. In this case, when the temperature was lowered to 400°C, the upper mold 6 came to be released from the press-molded optical material 11, and then the optical element 17 having an antireflection structure was taken out after being cooled in the cooling stage 9. Then, the surface was observed. As a result, although an optical element pattern having an antireflection structure was formed precisely in the center, pattern dislocation becomes larger as being more apart from the center, and the optical element pattern having an antireflection structure was doubled in the vicinity of the periphery. This seems to occur for the following reason. In a method for producing an optical element in which the upper mold 6 (mold 3 having an antireflection structure) cannot be released from the press-molded optical material 11, if the upper mold 6 (mold 3 having an antireflection structure) is cooled after the optical material 11 is pressed, a thermal stress is caused by the difference in the thermal expansion coefficient between the upper mold 6 (mold 3 having an antireflection structure) and the press-molded optical material 11, and the upper mold 6 (mold 3 having an antireflection structure) is dislocated from the optical material 11. Therefore, with such a production method, an optical element having a highly precise antireflection structure without pattern dislocation over a large area cannot be molded repeatedly.

On the other hand, as in this embodiment, when N₂ and CO₂ (10 vol.%) are introduced to the molding machine, the upper mold 6 (mold 3 having an antireflection structure) can be released easily from the press-molded optical material 11 at the temperature that is used for press-molding. The upper mold 6 (mold 3 having an antireflection structure) can be released from the press-molded optical material 11 without being cooled (at a high temperature unchanged) for the following reason. When CO₂ gas is adsorbed onto the surfaces of the optical material 11 and the mold, the CO₂ gas can be provided with the function of a releasing agent and a releasing film. As a result, a thermal stress due to the difference in the thermal expansion coefficient between the upper mold 6 (mold 3 having an antireflection structure) and the press-molded optical material 11 can be prevented from being generated, so that the precision of the pattern transferred to the optical material 11 can be increased. Thus, as described above, an optical element 17 having a highly precise antireflection structure without pattern dislocation over a large area can be molded repeatedly.

In this embodiment, the optical element 17 having an antireflection structure is molded while introducing N₂ and CO₂ (10 vol.%) from the atmosphere gas inlet 18 of the chamber 15 to the molding machine. However, the gas is not limited to such an atmosphere, and any atmospheres in which gas or atomized liquid containing carbon (C) or fluorine (F) in the constituent molecules is mixed in an inert gas such as nitrogen (N₂) or argon (Ar) can be used. For example, the same effect as above also can be obtained when the optical element 17 having an antireflection structure is molded while a gas obtained by passing a mixed gas of N₂ and CF₄ (10 vol.%) or N₂ gas through an ethylene glycol solution is introduced to the molding machine.

### [Fourth Embodiment]

In this embodiment, a plano-convex lens having a cone-shaped microstructure having a pitch of 0.15 µm and a depth of 0.15 µm on one surface that is a convex surface is produced as the optical element having an antireflection structure of the present invention.

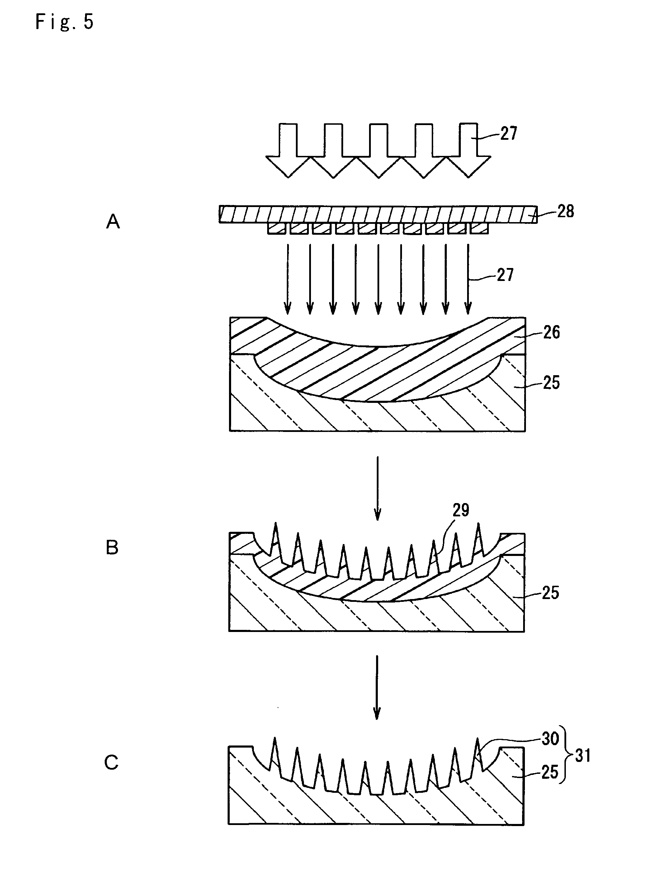

In this embodiment, a mold produced in the following manner was used as the mold having an antireflection structure (upper mold). FIG. 5 shows a process sequence schematically showing a method for producing the mold having an antireflection structure used in the fourth embodiment of the present invention.

As shown in FIG. 5A, first, the surface (pressing surface) of a cylindrical quartz glass substrate 25 having a thickness of 10 mm and a diameter of 5 mm that was to be formed into a mold for press-molding an optical element having an antireflection structure was processed so as to be concave, which is an inverse shape of a convex lens, by high precision grinding and polishing. Thereafter, a PMMA resist 26 having a thickness of 0.5 µm that is a resist for X ray lithography was formed by spin-coating on the surface (pressing surface) of the concave quartz glass substrate 25.

Then, as shown in FIGS. 5A and 5B, a cone-shaped pattern made of the PMMA resist having a diameter of 0.15 µm and a height of 0.3 µm was formed at a pitch of 0. 15 µm on the surface (pressing surface) of the quartz glass substrate 25 as a mask 29 corresponding to an antireflection structure by moving a mask 28 for X-ray lithography highly precisely while irradiating X rays 27. This mask 29 was formed in an array with a pitch of a wavelength to be used or less.

Then, referring to FIGS. 5B and 5C, the quartz glass substrate 25 in which the mask 29 made of the PMMA resist was formed was placed in a RF dry-etching apparatus and the surface of the quartz glass substrate 25 was etched with CHF₃ + O₂ gas. Thus, a cone-shaped antireflection structure 30 with a pitch of 0.15 µm and a height of 0.15 µm was formed on the surface (pressing surface) of the quartz glass substrate 25.

Finally, an Ir-Rh alloy film having a thickness of 0.05 µm for protecting the surface was formed via a Cr film by sputtering on the surface (pressing surface) of the quartz glass substrate 25 provided with the cone-shaped antireflection structure 30. In this manner, the mold 31 having an antireflection structure was obtained.

A lower mold has the following structure. An Ir-Rh alloy film having a thickness of 0.5 µm for protecting the surface is formed by sputtering on the surface of a cylindrical WC-based cemented carbide having a thickness of 10 mm and a diameter of 5 mm. A method for producing the optical element (plano-convex lens) having an antireflection structure, using the mold 31 having an antireflection structure (upper mold) and the lower mold, is the same as that in the first embodiment (see FIGS. 3 and 4) and therefore is not described further.

Also with this embodiment, for the same reason as in the first embodiment, the upper mold (mold 31 having an antireflection structure) can be released without being cooled from the press-molded optical material 11, and therefore the optical element (plano-convex lens) having a highly precise antireflection structure without pattern dislocation over a large area can be molded repeatedly.

In this embodiment, the cone-shaped mask 29 corresponding to an antireflection structure is formed on the surface (pressing surface) of the quartz glass substrate 25. However, the mask is not limited to this structure, and for example, a polygonal pyramid-shaped mask can be formed.

### [Fifth Embodiment]

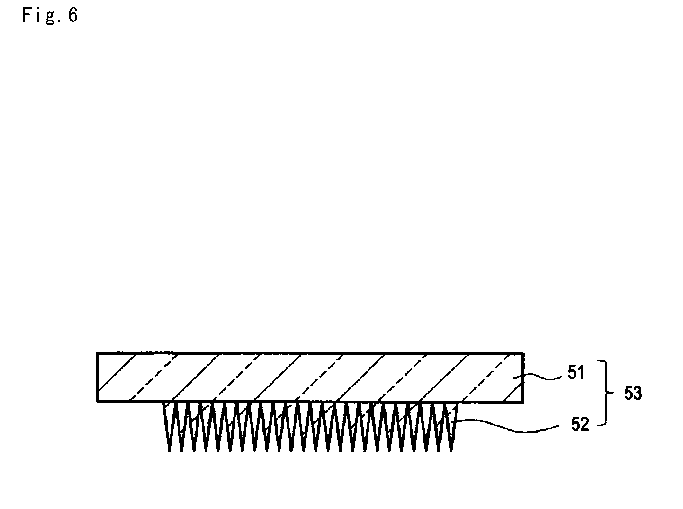

This embodiment will be described by taking a plate optical element having a cone-shaped microstructure with a pitch of 0.15 µm and a height of 0.15 µm at one face as an example of the optical element having an antireflection structure of the present invention. FIG. 6 is a cross-sectional view showing a master mold having an antireflection structure for producing a mold for press-molding an optical element having an antireflection structure in the fifth embodiment of the present invention. In FIG. 6, reference numeral 51 denotes a quartz glass substrate of 20 mm × 20 mm × 5 mm. Quartz glass is a material that has excellent high temperature strength and heat resistance and whose surface is hardly roughened by dry-etching. In the surface (pressing surface) of the quartz glass substrate 51, a cone-shaped antireflection structure 52 having a pitch of 0. 15 µm and a height of 0.15 µm is formed, and the quartz glass substrate 51 in which this antireflection structure 52 is formed is used as a master mold 53 having an antireflection structure.

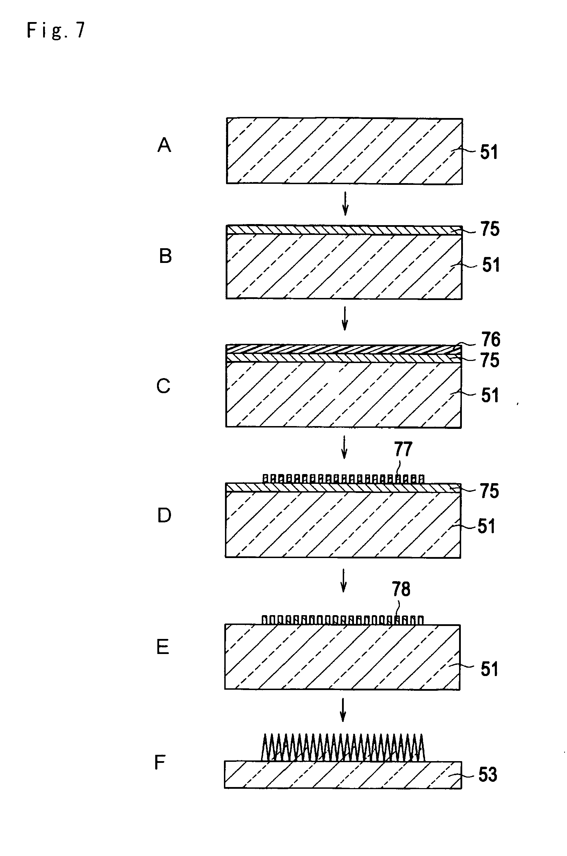

Hereinafter, a method for producing the master mold 53 having an antireflection structure will be described with reference to FIG. 7. As shown in FIG. 7A, the surface (pressing surface) of the quartz glass substrate 51 was processed so as to be smooth by high precision grinding and polishing (Ra: about 2nm). Then, as shown in FIG. 7B, a Cr film 75 having a thickness of 0.1 µm was formed by sputtering on the surface (pressing surface) of the quartz glass substrate 51 that had been processed so as to be smooth.

Then, as shown in FIG. 7C, a PMMA resist 76 having a thickness of 0.1 µm was formed on the surface of the Cr film 75 by spin-coating. Then, as shown in FIG. 7D, a cylinder-shaped pattern 77 made of the PMMA resist having a diameter of 0.15 µm was formed on the surface of the Cr film 75 at a pitch of 0.15 µm by EB (electron beams) lithography. Then, as shown in FIG. 7E, a cylinder-shaped pattern made of Cr corresponding to the antireflection structure 52 was formed as a mask on the surface (pressing surface) of the quartz glass substrate 51 by wet-etching the Cr film 75 (Cr mask 78). This mask was formed in an array with a pitch of a wavelength to be used or less.

Then, as shown in FIG. 7F, the quartz glass substrate 51 in which the cylinder-shaped Cr mask 78 was formed was placed in a RF dry-etching apparatus and the surface of the quartz glass substrate 51 was etched with CHF₃ + O₂ gas. Thus, the Cr mask 78 also was etched little by little together with the quartz glass substrate 51, and the width thereof was reduced. Then, the surface of the substrate was etched until the Cr mask 78 was no longer present, so that a cone-shaped antireflection structure 52 with a pitch of 0. 15 µm and a height of 0. 15 µm was formed on the surface (pressing surface) of the quartz glass substrate 51.

Finally, an Ir-Rh alloy film having a thickness of 0.05 µm for protecting the surface was formed by sputtering on the surface (pressing surface) of the quartz glass substrate 51 provided with the cone-shaped antireflection structure 52. In this manner, the master mold 53 having an antireflection structure was obtained.

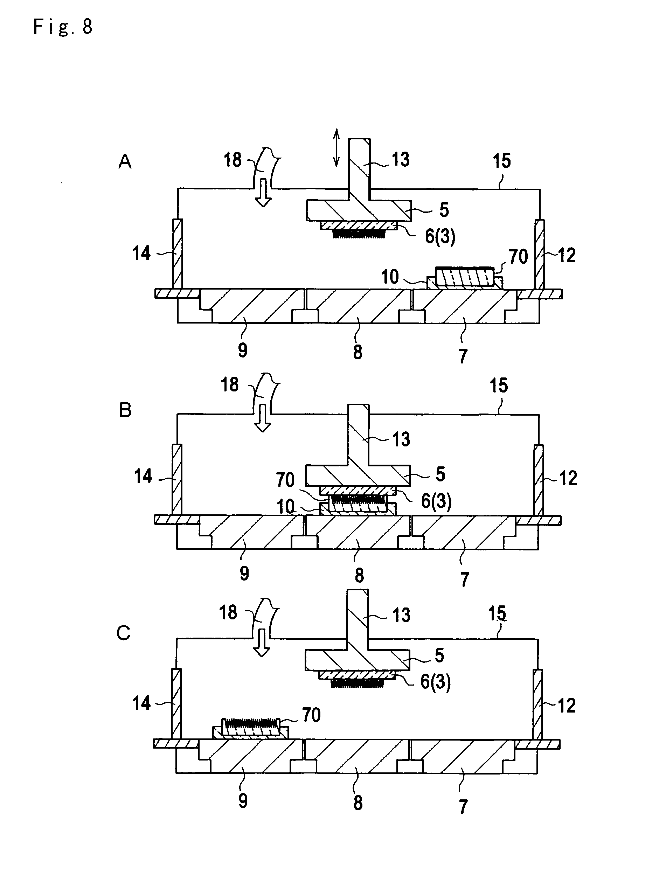

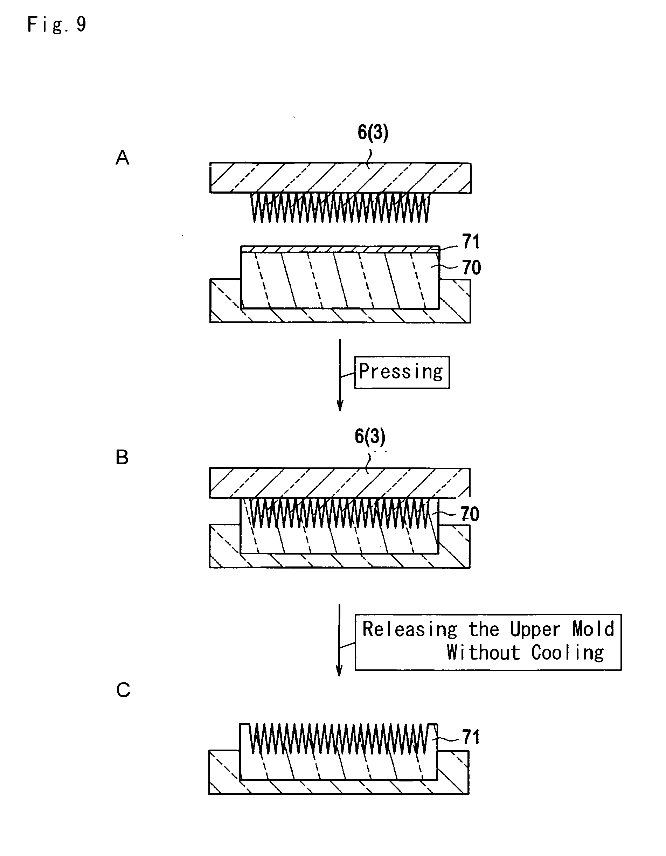

Hereinafter, a method for producing a replica mold having an antireflection structure for press-molding an optical element having an antireflection structure, using the master mold 53 having an antireflection structure having the above-described structure, will be described with reference to FIGS. 8 and 9. FIG. 8 shows a process sequence of a process for molding a replica mold having an antireflection structure in the fifth embodiment of the present invention. FIG. 9 shows a process sequence of a method for molding the replica mold having an antireflection structure in the fifth embodiment of the present invention.

As shown in FIG. 8A, first, the master mold 53 having an antireflection structure serving as an upper mold 6 was fixed on an upper head 5 of a molding machine that was covered with a chamber 15 and to which N₂ gas was introduced from an atmosphere gas inlet 18, and the upper mold 6 was heated to a predetermined temperature (750°C in this embodiment) together with a press stage 8. Moreover, a preheated stage 7 also was heated to 750°C. Then, alkali-free glass 70 (glass transition point (Tg): 625°C, deformation point (At) : 696°C) that is a high melting point glass and has better heat resistance than the optical material of 15 mm × 15 mm × 1.0 mm, was placed on the lower mold 10, and the lower mold 10 on which the high melting point glass 70 was placed was put in the molding machine from a mold inlet 12 of the chamber 15, and heated in the preheated stage 7 that was set to 750°C for 2 minutes. In this embodiment, a releasing agent 71 containing fine particles of boron nitride (BN) for mold release was applied onto the surface of the alkali-free glass 70 (see FIG. 9A).

As shown in FIG. 8B, the lower mold 10 provided with the alkali-free glass 70 that is a high melting point glass was transported from the preheated stage 7 to the press stage 8 that also was set to 750°C. Then, a cylinder 13 was lowered so as to press the alkali-free glass 70 with the upper mold 6 that also was set to 750°C and fixed to the upper head 5 at a pressure to be applied of 2000 N for 2 minutes (see FIGS. 9A and 9B). Then, the cylinder 13 was lifted without being cooled (at the temperature unchanged) so that the upper mold 6 as well as the upper head 5 were lifted, and thus the upper mold 6 was released from the press-molded alkali-free glass 70 (see FIGS. 9B and 9C).

Here, the upper mold 6 can be released without being cooled (at a high temperature unchanged) from the press-molded alkali-free glass 70, because the wettability between the BN particles and the alkali-free glass 70 is poor. In other words, with oxide or metal, the upper mold cannot be released without being cooled (at a high temperature unchanged), whereas with BN particles (or C particles), the wettability thereof with the alkali-free glass 70 is very poor, so that the upper mold can be released without being cooled (at a high temperature unchanged). When the upper mold 6 is released from the press-molded alkali-free glass 70, the press-molded alkali-free glass 70 remains on the lower mold 10.

Then, as shown in FIG. 8C, the lower mold 10 provided with the press-molded alkali-free glass 70 that is a high melting point glass was transported from the press stage 8 to a cooling stage 9 that was set to 400°C, and was cooled for 2 minutes there.

Finally, the press-molded alkali-free glass 70 was taken from a mold outlet 14 of the chamber 15 together with the lower mold 10, the press-molded alkali-free glass 70 was removed from the lower mold 10, and then the releasing agent 71 was removed. Then, an Ir-Rh alloy film having a thickness of 0.05 µm for protecting the surface was formed by sputtering. Thus, a replica mold 72 having an antireflection structure was obtained (see FIG. 9C).

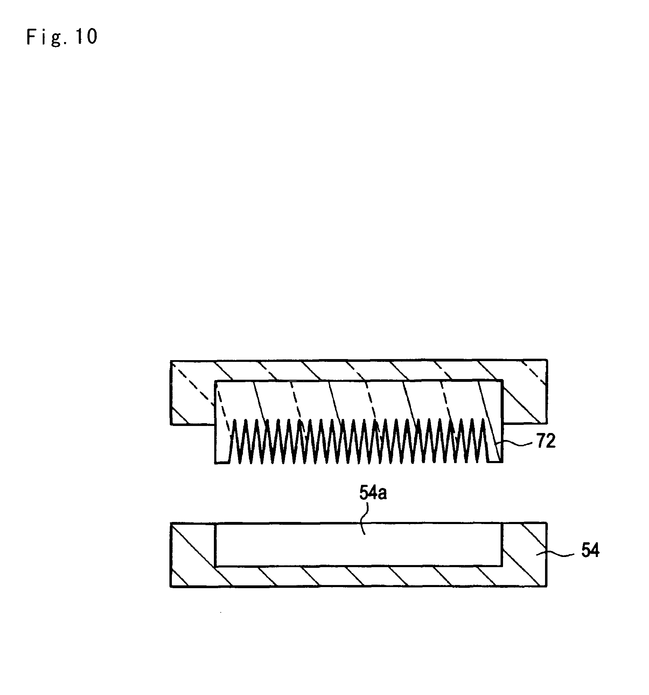

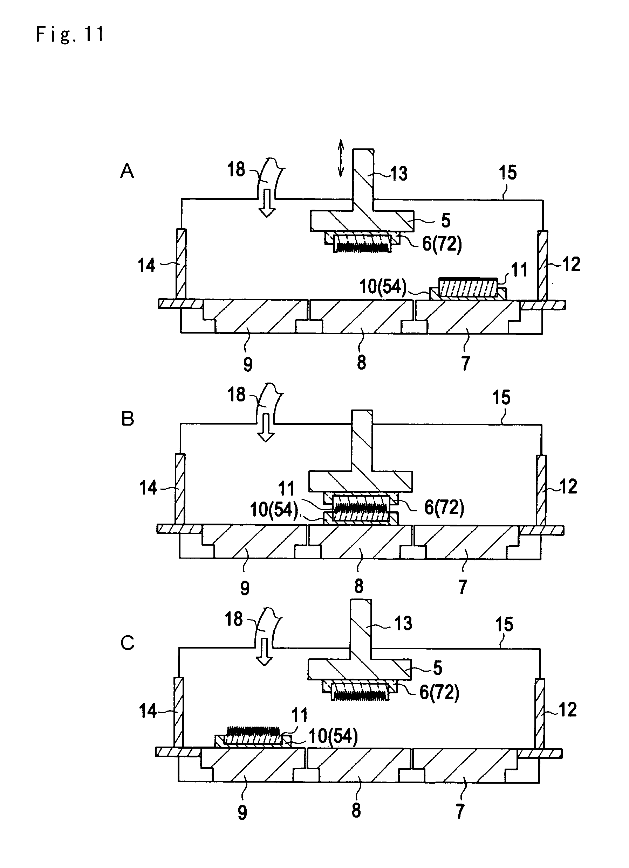

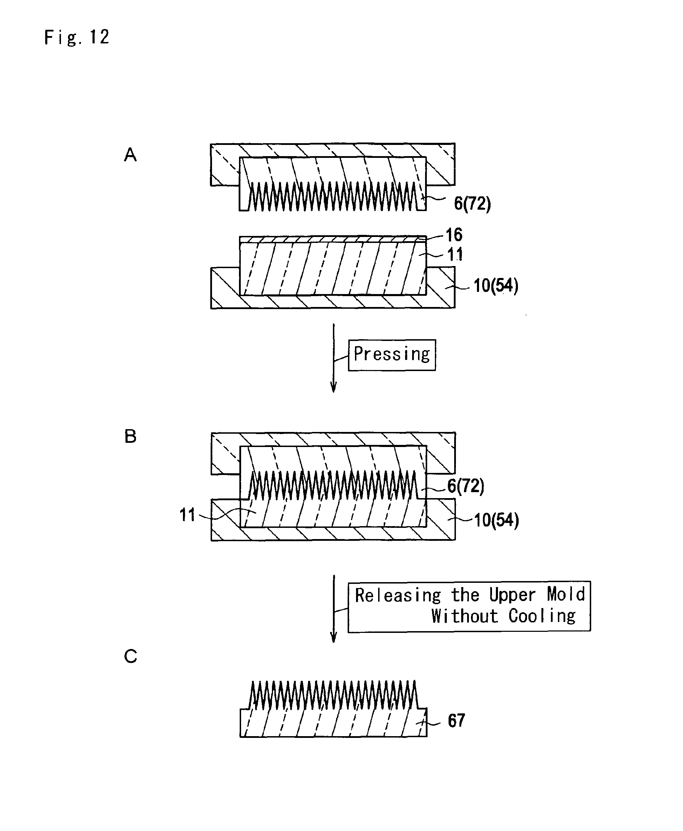

Hereinafter, a method for producing an optical element having an antireflection structure, using the replica mold 72 having an antireflection structure having such structures and a lower mold 54 will be described. FIG. 10 is a cross-sectional view showing a mold for press-molding an optical element having an antireflection structure in the fifth embodiment of the present invention. FIG. 11 shows a process sequence of a process for molding an optical element having an antireflection structure in the fifth embodiment of the present invention. FIG. 12 shows a process sequence of a method for press-molding an optical element having an antireflection structure in the fifth embodiment of the present invention.

In FIG. 10, reference numeral 72 denotes the replica mold having an antireflection structure, and the lower mold 54 has the following structure. A recess 54a of 15 mm × 15 mm × 0.5 mm is formed in the central portion of a WC-based cemented carbide of 20 mm × 20 mm × 5 mm, and an Ir-Rh alloy film having a thickness of 0.5 µm for protecting the surface is formed on the surface provided with the recess 54a by sputtering.

As shown in FIG. 11A, first, the replica mold 72 having an antireflection structure serving as an upper mold 6 was fixed on an upper head 5 of a molding machine that was covered with a chamber 15 and to which N₂ gas was introduced from an atmosphere gas inlet 18, and the upper mold 6 was heated to a predetermined temperature (590°C in this embodiment) together with a press stage 8. Moreover, a preheated stage 7 also was heated to 590°C. Then, the above-described lower mold 54 was used as a lower mold 10, and crown based borosilicate glass (glass transition point (Tg): 501°C, deformation point (At): 549°C) of 15 mm × 15 mm × 1.0 mm was placed as an optical material 11 on the lower mold 10, and the lower mold 10 on which the optical material 11 was placed was put in the molding machine from a mold inlet 12 of the chamber 15, and heated in the preheated stage 7 that was set to 590°C for 3 minutes. In this embodiment, a releasing agent 16 containing fine particles of boron nitride (BN) for mold release was applied onto the surface of the optical material 11 (see FIG. 12A).

As shown in FIG. 11B, the lower mold 10 provided with the optical material 11 was transported from the preheated stage 7 to the press stage 8 that also was set to 590°C. Then, a cylinder 13 was lowered so as to press the optical material 11 with the upper mold 6 that also was set to 590°C and fixed to the upper head 5 at a pressure to be applied of 1000 N for 3 minutes (see FIGS. 12A and 12B). Then, the cylinder 13 was lifted without being cooled (at the temperature unchanged) so that the upper mold 6 as well as the upper head 5 were lifted, and thus the upper mold 6 was released from the press-molded optical material 11 (see FIGS. 12B and 12C). Here, the upper mold 6 can be released without being cooled (at a high temperature unchanged) from the press-molded optical material 11 for the same reason above. When the upper mold 6 is released from the press-molded optical material 11, the press-molded optical material 11 remains on the lower mold 10.

Then, as shown in FIG. 11C, the lower mold 10 provided with the press-molded optical material 11 was transported from the press stage 8 to a cooling stage 9 that was set to 300°C, and was cooled for 3 minutes there.

Finally, the press-molded optical material 11 was taken from a mold outlet 14 of the chamber 15 together with the lower mold 10, the press-molded optical material 11 was removed from the lower mold 10, and then the releasing agent 16 was removed. Thus, an optical element 67 having an antireflection structure was obtained (see FIG. 12C).

According to this embodiment, it is possible to release the upper mold 6 (master mold 53 having an antireflection structure) from the press-molded alkali-free glass 70 that is a high melting point glass without cooling, and also possible to release the upper mold 6 (replica mold 72 having an antireflection structure) from the press-molded optical material 11 without cooling, so that both a thermal stress due to the difference in the thermal expansion coefficient between the upper mold 6 (master mold 53 having an antireflection structure) and the press-molded alkali-free glass 70 and a thermal stress due to the difference in the thermal expansion coefficient between the upper mold 6 (replica mold 72 having an antireflection structure) and the press-molded optical material 11 can be prevented from being generated, and thus the deterioration of the precision of the pattern transferred to the master mold 53 having an antireflection structure, the replica mold 72 having an antireflection structure, and the optical material 11 in this order can be suppressed. Consequently, the optical element 67 having a highly precise antireflection structure without pattern dislocation over a large area can be molded repeatedly.

Also, according to this embodiment, because the optical element 67 is produced by press-molding using the master mold 53 having an antireflection structure and the replica mold 72 having an antireflection structure, the optical element 67 having an antireflection structure can be produced with high repeatability. As a result, the mass productivity is significantly improved, and therefore the production cost can be decreased significantly.

In this embodiment, quartz glass is used as the mold material that has excellent high temperature strength and heat resistance and whose surface is hardly roughened by dry-etching. However, the present invention is not limited to quartz glass as the mold material, but for example, mold materials in which a SiO₂ film or a Si film is formed on silicon, a Ni alloy, or cemented carbide may be used.

In this embodiment, crown based boronilicate glass is used as the optical material 11. However, the present invention is not limited to crown based borosilicate glass as the optical material, and multicomponent glass or resin can be used. In addition to borosilicate glass, examples of multicomponent glass include aluminosilicate glass, flint glass and phosphate glass. Examples of resin include acryl, fluorine-containing resin, polyethylene, and polyolefin. Since an antireflection structure is formed by molding, even if multicomponent glass or resin is used as the optical material 11, an optical element having an antireflection structure having a large aspect ratio can be obtained.

In this embodiment, an Ir-Rh alloy film is used as a thin film for protecting the surface. However, the present invention is not limited to Ir-Rh alloy films as a thin film for protecting the surface. As a thin film for protecting the surface, films containing at least one metal selected from the group consisting of Pt, Pd, Ir, Rh, Os, Ru, Re, W and Ta can be used. When the releasing agent 16 is not applied uniformly onto the surface of the optical material 11, without the thin film for protecting the surface, the optical material 11 is partially in contact directly with the mold, and fused completely so that the optical material cannot be released at all. When it is attempted to release the optical material forcefully, the optical material 11 is broken. The thin film such as an Ir-Rh alloy film for protecting the surface is provided to prevent this.

In this embodiment, a cylinder-shaped Cr mask corresponding to the antireflection structure 52 is formed on the surface (pressing surface) of the quartz glass substrate 51. However, for example, a mask can be formed of a material such as Ni, Au or C, or a polygonal prism-shaped mask can be formed.

In this embodiment, a resist is patterned into a cylindrical shape or a polygonal prismatic shape, using electron beam lithography, but a resist can be patterned into a cylindrical shape or a polygonal prismatic shape, using X-ray lithography or photolithography employing interference exposure.

In this embodiment, a mask is formed into a cylindrical shape or a polygonal prismatic shape by wet-etching, but a mask can be formed into a cylindrical shape or a polygonal prismatic shape by dry-etching.

### [Sixth Embodiment]

In this embodiment, substantially the same mold as in the fifth embodiment was used as the master mold having an antireflection structure for producing a mold for press-molding an optical element having an antireflection structure (see FIG. 6). The master mold 53 having an antireflection structure in this embodiment is different from the master mold 53 having an antireflection structure in the fifth embodiment in the following point. In this embodiment, when producing the master mold 53 having an antireflection structure, a carbon (C) film for mold release having a thickness of 0.05 µm was formed on the surface (pressing surface) of the quartz glass substrate 51 provided with the cone-shaped antireflection structure 52, instead of forming an Ir-Rh alloy film for protecting the surface. For this reason, in this embodiment, unlike the fifth embodiment, a releasing agent for mold release is not applied onto the surface of the alkali-free glass 70 that is a high melting point glass to be press-molded.

Moreover, in this embodiment, substantially the same mold as in the fifth embodiment was used as the replica mold having an antireflection structure for press-molding an optical element having an antireflection structure (see reference numeral 72 in FIG. 10). The replica mold 72 having an antireflection structure in this embodiment is different from the replica mold 72 having an antireflection structure in the fifth embodiment in the following point. In this embodiment, when producing the replica mold 72 having an antireflection structure, a carbon (C) film for mold release having a thickness of 0.05 µm was formed on the surface (pressing surface) of the press-molded alkali-free glass 70 that is a high melting point glass. For this reason, in this embodiment, unlike the fifth embodiment, a releasing agent for mold release is not applied onto the surface of the optical material 11 to be press-molded.

A method for producing the replica mold having an antireflection structure for press-molding an optical element having an antireflection structure, using the master mold 53 having an antireflection structure, and a method for producing the optical element 67 having an antireflection structure, using the replica mold 72 having an antireflection structure and the lower mold 54 are the same as those in the fifth embodiment (see FIGS. 8, 9, 11 and 12) and therefore are not described further.

Also with this embodiment, for the same reason as in the fifth embodiment, it is possible to release the upper mold 6 (master mold 53 having an antireflection structure) from the press-molded alkali-free glass 70 that is a high melting point glass without cooling, and also possible to release the upper mold 6 (replica mold 72 having an antireflection structure) from the press-molded optical material 11 without cooling. Therefore, the optical element 67 having a highly precise antiref lection structure without pattern dislocation over a large area can be molded repeatedly.

In this embodiment, when producing the master mold 53 having an antireflection structure, a carbon (C) film is formed as a thin film for mold release on the surface (pressing surface) of the quartz glass substrate 51 provided with the cone-shaped antireflection structure 52. Moreover, when producing the replica mold 72 having an antireflection structure, a carbon (C) film is formed as a thin film for mold release on the surface (pressing surface) of the press-molded alkali-free glass 70 that is a high melting point glass. However, the thin film for mold release is not limited to a carbon (C) film, and for example, a boron nitride (BN) film may be used.

### [Seventh Embodiment]

In this embodiment, the same master mold as in the fifth embodiment was used as the master mold having an antireflection structure for press-molding an optical element having an antireflection structure (see FIG. 6).

In this embodiment, substantially the same replica mold as in the fifth embodiment was used as the replica mold having an antireflection structure for press-molding an optical element having an antireflection structure (see reference numeral 72 in FIG. 10). The replica mold 72 having an antireflection structure in this embodiment is different from the replica mold 72 having an antireflection structure in the fifth embodiment in the following point. In this embodiment, the replica mold 72 having an antireflection structure was produced (molded) while introducing N₂ and CO₂ (10 vol.%) from the atmosphere gas inlet 18 of the chamber 15 to the molding machine without applying a releasing agent for mold release onto the surface of the alkali-free glass 70 that is a high melting point glass to be press-molded.

The process for molding the optical element 67 having an antireflection structure in this embodiment is substantially the same as in the fifth embodiment. The process for molding the optical element 67 having an antireflection structure in this embodiment is different from the process for molding the optical element 67 having an antireflection structure in the fifth embodiment in the following point. In this embodiment, the optical element 67 having an antireflection structure was molded while introducing N₂ and CO₂ (10 vol.%) from the atmosphere gas inlet 18 of the chamber 15 to the molding machine without applying a releasing agent for mold release onto the surface of the optical material 11 to be press-molded.

When the production (molding) of the replica mold 72 having an antireflection structure and the molding of the optical element 67 having an antireflection structure with the replica mold 72 having an antireflection structure were performed in the atmosphere as above, it was found that an optical element 67 having a highly precise antireflection structure without pattern dislocation over the entire area of 15 mm × 15 mm of the optical material 11 could be molded repeatedly even after 10000 molding shots.

As a comparative example, the production (molding) of the replica mold 72 having an antireflection structure and the molding of the optical element 67 having an antireflection structure with the replica mold 72 having an antireflection structure were performed while introducing only N₂ gas to the molding machine under the same conditions. Then, the releasing properties between the master mold 53 having an antireflection structure and the alkali-free glass 70 that is a high melting point glass and the releasing properties between the replica mold 72 having an antireflection structure and the optical material 11 were poor, so that the master mold 53 having an antireflection structure could not be released from the press-molded alkali-free glass 70 without being cooled (at the temperature unchanged (750 °C)) after the alkali-free glass 70 was pressed, and the replica mold 72 having an antireflection structure could not be released from the press-molded optical material 11 without being cooled (at the temperature unchanged (590 °C)) after the optical material 11 was pressed.

In this case, when the temperature was lowered to 300°C or less, the master mold 53 having an antireflection structure came to be released from the press-molded alkali-free glass 70, and the replica mold 72 having an antireflection structure came to be released from the press-molded optical material 11, and then the optical element 67 having an antireflection structure was taken out after being cooled in the cooling stage 9. Then, the surface was observed. As a result, although an optical element pattern having an antireflection structure was formed precisely in the center, pattern dislocation becomes larger as being more apart from the center, and the optical element pattern having an antireflection structure was doubled in the vicinity of the periphery.

This seems to occur for the following reason. Inamethod for producing an optical element in which the master mold 53 having an antireflection structure and the replica mold 72 having an antireflection structure cannot be released from the press-molded alkali-free glass 70 and the press-molded optical material 11, respectively, without being cooled, a thermal stress is caused by the difference in the thermal expansion coefficient between the master mold 53 having an antireflection structure and the press-molded alkali-free glass 70 and the difference in the thermal expansion coefficient between the replica mold 72 having an antireflection structure and the press-molded optical material 11, and therefore the master mold 53 having an antireflection structure and the replica mold 72 having an antireflection structure are dislocated. Therefore, with such a production method, an optical element having a highly precise antireflection structure without pattern dislocation over a large area cannot be molded repeatedly.

On the other hand, as in this embodiment, when N₂ and CO₂ (10 vol.%) are introduced to the molding machine, the master mold 53 having an antireflection structure and the replica mold 72 having an antireflection structure can be released easily from the press-molded alkali free-glass 70 and the press-molded optical material 11, respectively, at the temperature that is used for press-molding. The master mold 53 having an antireflection structure and the replica mold 72 having an antireflection structure can be released from the press-molded alkali free-glass 70 and the press-molded optical material 11, respectively, without being cooled (at a high temperature unchanged) for the following reason. Onto the surfaces of the molds is adsorbed CO₂ gas, so that the wettability with the alkali-free glass 70 and the optical material 11 becomes poor. As a result, a thermal stress due to the difference in the thermal expansion coefficient between the master mold 53 having an antireflection structure and the press-molded alkali-free glass 70 that is a high melting point glass and the difference in the thermal expansion coefficient between the replica mold 72 having an antireflection structure and the press-molded optical material 11 can be prevented from being generated, so that the precision of the pattern transferred to the optical material 11 can be increased. Thus, as described above, an optical element 67 having a highly precise antireflection structure without pattern dislocation over a large area can be molded repeatedly.

In this embodiment, the production (molding) of the replica mold 72 having an antireflection structure and the molding of the optical element 67 having an antireflection structure with the replica mold 72 having an antireflection structure are performed while introducing N₂ and CO₂ (10 vol. %) from the atmosphere gas inlet 18 of the chamber 15 to the molding machine. However, the gas is not limited to such an atmosphere, and any atmospheres in which gas or atomized liquid containing carbon (C) or fluorine (F) in the constituent molecules is mixed in an inert gas such as nitrogen (N₂) or argon (Ar) can be used. For example, the same effect as above also can be obtained when the optical element 67 having an antireflection structure is molded while a gas obtained by passing a mixed gas of N₂ and CF₄ (10 vol.%) or N₂ gas through an ethylene glycol solution is introduced to the molding machine.

### [Eighth Embodiment]

In This embodiment, a microlens array with a convex shape of a pitch of 50 µm, a central height of 3 µm and a radius of curvature of 100 µm having a cone-shaped microstructure of a pitch of 0.15 µm and a height of 0.15 µm is produced as the optical element having an antireflection structure of the present invention.

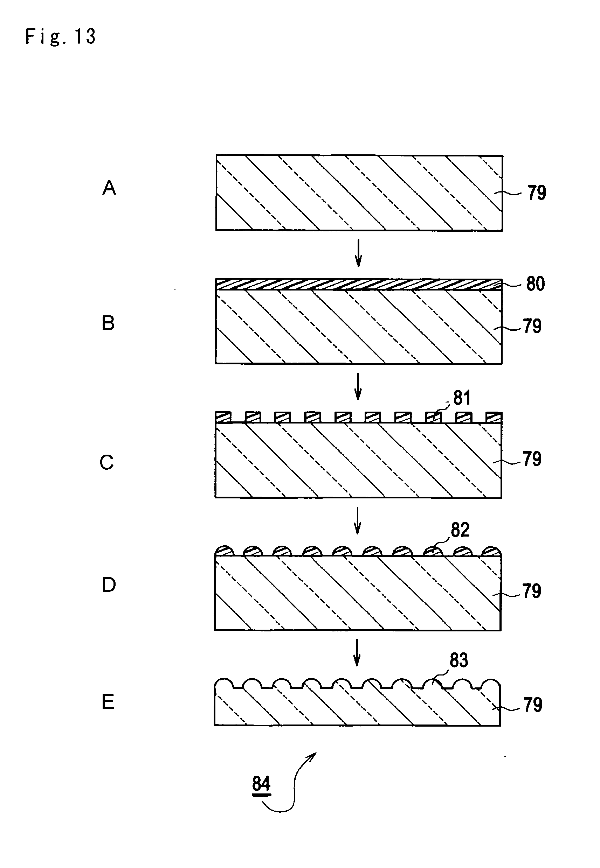

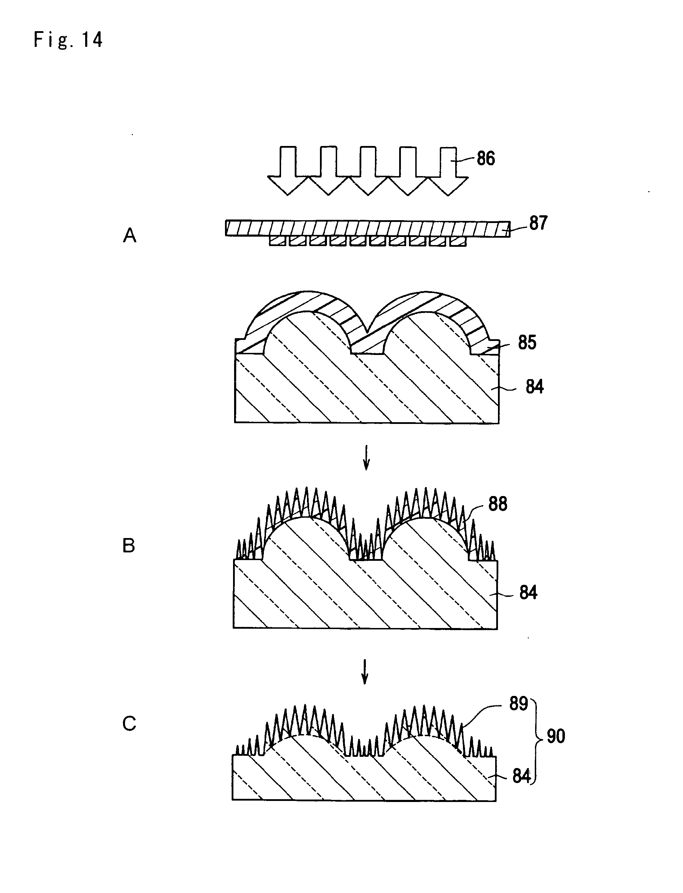

In this embodiment, as a master mold having an antireflection structure for a mold for press-molding an optical element having an antireflection structure, a mold produced in the following manner was used. FIG. 13 shows a process sequence of a process for producing a quartz microlens array on which the master mold having an antireflection structure used in the eighth embodiment of the present invention is based. FIG. 14 shows a process sequence of a process for producing the master mold having an antireflection structure used in the eighth embodiment of the present invention.

As shown in FIG. 13A, first, the surface of a quartz glass substrate 79 of 20 mm × 20 mm × 5 mm that was to serve as the master mold having an antireflection structure was processed so as to be smooth by high precision grinding and polishing (Ra: about 2nm). Then, as shown in FIG. 13B, a photoresist 80 having a thickness of 3 µm was formed by spin-coating on the surface of the quartz glass substrate 79 that had been processed so as to be smooth. Then, as shown in FIG. 13C, a cylinder-shaped photoresist pattern 81 was formed by irradiating the surface of the quartz glass substrate 79 provided with the photoresist 80 with ultraviolet rays via a photomask provided with a circular pattern of a pitch of 50 µm and performing development, and removing an unexposed portion.

Then, as shown in FIG. 13D, the entire substrate was heated at a temperature (200°C) at which the photoresist was melted, and heating for melting was performed until each cylinder-shaped photoresist was provided with a microlens shape by surface tension. Thus, a semispherical photoresist pattern 82 was formed on the surface of the quartz glass substrate 79. Then, as shown in FIG. 13E, the quartz glass substrate 79 on which the semispherical photoresist pattern 82 was formed was cooled and then was placed in a RF dry-etching apparatus and the surface of the quartz glass substrate 79 was etched with CHF₃ + O₂ gas. Thus, a microlens array 83 with a pitch of 50 µm and a height of 3 µm was formed on the surface of the quartz glass substrate 79, and a quartz microlens array 84 was obtained.

Then, an antireflection structure was formed on the thus produced quartz microlens array 84 by the process shown in FIG. 14. As shown in FIG. 14A, first, a PMMA resist 85 having a thickness of 0.5 µm that is a resist for X ray lithography was formed on the surface of the quartz microlens array 84 by spin-coating. Then, as shown in FIGS. 14A and 14B, a cone-shaped pattern made of the PMMA resist having a diameter of 0.15 µm and a height of 0.3 µm was formed at a pitch of 0.15 µm on the surface of the quartz microlens array 84 as a mask 88 corresponding to an antireflection structure by moving a mask 87 for X-ray lithography highly precisely and developing while irradiating X rays 86. This mask 88 was formed in an array with a pitch of a wavelength to be used or less.

Then, as shown in FIG. 14C, the quartz microlens array 84 in which the mask 88 made of the PMMA resist was formed was placed in a RF dry-etching apparatus and the surface of the quartz microlens array 84 was etched with CHF₃ + O₂ gas. Thus, a cone-shaped antireflection structure 89 with a pitch of 0.15 µm and a height of 0. 15 µm was formed on the surface of the quartz microlens array 84. Finally, an Ir-Rh alloy film having a thickness of 0.05 µm for protecting the surface was formed via a Cr film by sputtering on the surface of the quartz microlens array 84 provided with the cone-shaped antireflection structure 89. In this manner, the master mold 90 having an antireflection structure was obtained.

A method for producing a replica mold having an antireflection structure for press-molding a microlens array as an optical element having an antireflection structure, using the master mold 90 having an antireflection structure, and a method for producing the microlens array as an optical element having an antireflection structure, using the replica mold having an antireflection structure and the lower mold are the same as those in the fifth embodiment (see FIGS. 8, 9, 11 and 12) and therefore are not described further.

Also with this embodiment, for the same reason as in the fifth embodiment, it is possible to release the upper mold 6 (master mold 90 having an antireflection structure) from the press-molded alkali-free glass 70 that is a high melting point glass without cooling, and also possible to release the upper mold 6 (replica mold having an antireflection structure) from the press-molded optical material 11 without cooling. Therefore, the microlens array as an optical element having a highly precise antireflection structure without pattern dislocation over a large area can be molded repeatedly.

As described above, according to this embodiment, it is possible to produce easily a mold for molding a microlens array, the inverse shape of which is a concave shape for which a mold is very difficult to produce, and it is easy to form an antireflection structure on the surface of the microlens array.

In this embodiment, a cone-shaped mask corresponding to the antireflection structure is formed on the surface (pressing surface) of the quartz glass substrate 79. However, the present invention is not limited to this structure. For example, a polygonal pyramid-shaped mask can be formed.

### INDUSTRIAL APPLICABILITY

An optical element according to the present invention is suitable as a lens element, a mirror element and a prism element used for an imaging optical system such as a digital still camera or a video camera, a projection optical system such as a projector, an illumination optical system, and a laser optical system such as an optical pickup device or an optical scanning device, as a microlens array used for improving luminance of a liquid crystal display, and as a coupling microlens used in optical networking.

## Claims

1. An optical element comprising an antireflection structure on its surface,
wherein the antireflection structure is formed with multicomponent glass and has a plurality of cone-shaped or polygonal pyramid-shaped structures being arranged, and an aspect ratio of which is 1 or more.

2. The optical element according to claim 1, wherein the plurality of cone-shaped or polygonal pyramid-shaped structures is arranged with a pitch of a wavelength of light, the reflection of which should be prevented, or less.

3. The optical element according to claim 1, wherein the antireflection structure is formed on a curved surface.

4. The optical element according to claim 1, wherein the optical element is a lens element, and the antireflection structure is formed on a lens surface.

5. The optical element according to claim 1, wherein the optical element is a microlens array, and the antireflection structure is formed on each of lens surfaces.

6. A method for producing an optical element having an antireflection structure on its surface, which is formed with multicomponent glass and has a plurality of cone-shaped or polygonal pyramid-shaped structures being arranged, and an aspect ratio of which is 1 or more, comprising the steps of:
heating multicomponent glass material;
press-molding a heated multicomponent glass material with a mold having a shape corresponding to the antireflection structure to be formed; and
removing a molded multicomponent glass material from the mold before the material is cooled to a temperature at which no change of a shape of the material occurs.

7. The method for producing an optical element according to claim 6, further comprising the step of:
applying a releasing agent to the multicomponent glass material prior to the step of heating the multicomponent glass material.

8. The method for producing an optical element according to claim 6, wherein a thin film for mold release is formed on a surface of the mold in the step of press-molding.

9. The method for producing an optical element according to claim 6, wherein a thin film for protecting a surface is formed on the mold in the step of press-molding.

10. The method for producing an optical element according to claim 6, wherein an atmosphere in which gas or atomized liquid containing carbon or fluorine in the constituent molecules is mixed in an inert gas is employed for press-molding in the step of press-molding.
